(19) Europäisches Patentamt
European Patent Office
Office européen des brevets

(11) **EP 3 693 239 A1**

(12) **EUROPEAN PATENT APPLICATION**
published in accordance with Art. 153(4) EPC

(43) Date of publication:
**12.08.2020 Bulletin 2020/33**

(51) Int Cl.:
***B60W 10/08*** (2006.01)          ***B60W 20/00*** (2016.01)
***B60W 20/10*** (2016.01)

(21) Application number: **17928051.6**

(22) Date of filing: **06.10.2017**

(86) International application number:
**PCT/JP2017/036507**

(87) International publication number:
**WO 2019/069458 (11.04.2019 Gazette 2019/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicants:
• **Kabushiki Kaisha Toshiba
Minato-ku
Tokyo 105-8001 (JP)**

• **Toshiba Infrastructure Systems &
Solutions Corporation
Kawasaki-shi, Kanagawa 212-0013 (JP)**

(72) Inventors:
• **SHIMIZU, Yosuke
Tokyo 105-8001 (JP)**
• **KUWANO, Yuuki
Tokyo 105-8001 (JP)**

(74) Representative: **AWA Sweden AB
Junkersgatan 1
582 35 Linköping (SE)**

(54) **HYBRID VEHICLE**

(57)     A hybrid vehicle system according to an embodiment includes: a prime mover 10; a first motor generator 30; a second motor generator 80; a power transmission mechanism 20 configured to distribute power of the prime mover 10 to the first motor generator 30 and a power transmission shaft 110; a power combining mechanism 90 configured to combine power of the power transmission shaft 110 and power of the second motor generator 80; an axle 100 to which power combined in the power combining mechanism 90 is transmitted; a first inverter 40 configured to drive the first motor generator 30; a second inverter 60 electrically connected to the first inverter 40 via DC links and configured to drive the second motor generator 80; a battery BT electrically connected to the DC links; and an overall controller CTR configured to output a torque necessary for starting the prime mover 10 by means of one of the first motor generator 30 and the second motor generator 80 when starting the prime mover 10, and drive the first inverter 40 and the second inverter 60 so that at least part of energy generated by the one when starting the prime mover 10 is consumed by the other one.

F I G. 1

**Description**

FIELD

Embodiments described herein relate generally to a hybrid vehicle.

BACKGROUND

A hybrid vehicle configured to transmit both energy supplied from an internal combustion engine and energy supplied from a storage battery to an axle has been proposed.

A series-parallel hybrid vehicle has a triaxial power transmission mechanism that divides and supplies (transmits) energy supplied from the internal combustion engine to the motor generator (generator) side and the axle side. In the series-parallel hybrid vehicle, the axle can be rotated by energy supplied from the internal combustion engine to the axle via the triaxial power transmission mechanism, electrical energy supplied from the motor generator, and energy supplied from a battery.

In the series-parallel hybrid vehicle, the rotation speed of the axle (vehicle speed) and the rotation speed of the internal combustion engine can be independently determined. In the series parallel hybrid vehicle, the output torque of the vehicle and the output of the internal combustion engine can also be independently determined. As a result, the operating point of the internal combustion engine can be determined regardless of the driving state of the vehicle; therefore, selecting an efficient operating point for the internal combustion engine enables the internal combustion engine to operate with high efficiency, and can improve fuel efficiency.

When there is a difference between the output energy of the internal combustion engine and the output energy of the vehicle, it is also possible to adjust the excess or deficiency of energy by charging or discharging of the battery connected to the DC links. Accordingly, the motor generator connected to the DC links can be operated independently.

CITATION LIST

PATENT LITERATURE

[Patent Literature 1] Japanese Patent No. 5866803
[Patent Literature 2] Japanese Patent No. 5929940

SUMMARY

TECHNICAL PROBLEM

However, the input (charging) current or output (discharging) current of the battery may be limited when the capacity of the battery is small or due to a factor such as environmental temperature. For example, to start an internal combustion engine, a large current needs to be passed through the battery depending on the traveling state (speed). If the input current and output current of the battery are limited at this time, there is a possibility that the voltage of the DC links will increase, the inverter stops, and the internal combustion engine will be unable to be started.

The embodiments of the present invention have been made in view of the above circumstances, and provide a highly reliable vehicle system.

SOLUTION TO PROBLEM

A hybrid vehicle system according to an embodiment includes: a prime mover; a first motor generator; a second motor generator; a power transmission mechanism configured to distribute power of the prime mover to the first motor generator and a power transmission shaft; a power combining mechanism configured to combine power of the power transmission shaft and power of the second motor generator; an axle to which power combined in the power combining mechanism is transmitted; a first inverter configured to drive the first motor generator; a second inverter electrically connected to the first inverter via DC links and configured to drive the second motor generator; a battery electrically connected to the DC links; and an overall controller configured to output a torque necessary for starting the prime mover by means of one of the first motor generator and the second motor generator when starting the prime mover, and drive the first inverter and the second inverter so that at least part of energy generated by the one of the first motor generator and the second motor generator when starting the prime mover is consumed by an other one of the first motor generator and the second motor generator.

BRIEF DESCRIPTION OF THE DRAWINGS

FIG. 1 is a diagram schematically showing a configuration example of a hybrid vehicle according to one embodiment.
FIG. 2 is a block diagram schematically showing a configuration example of an overall controller of a hybrid vehicle according to a first embodiment.
FIG. 3 is a block diagram schematically showing a configuration example of an overall controller of a hybrid vehicle according to a second embodiment.
FIG. 4 is a block diagram schematically showing a configuration example of an overall controller of a hybrid vehicle according to a third embodiment.
FIG. 5 is a block diagram schematically showing another configuration example of the overall controller of the hybrid vehicle according to the third embodiment.

DETAILED DESCRIPTION

Hereinafter, hybrid vehicles according to the first to third embodiments will be described with reference to the drawings.

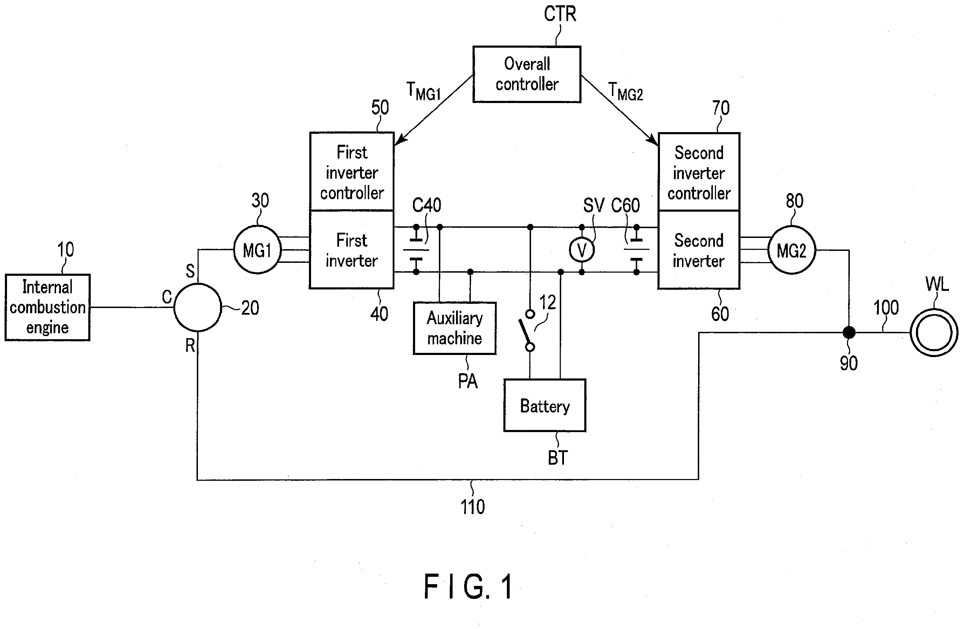

FIG. 1 is a diagram schematically showing a configuration example of a hybrid vehicle according to one embodiment.
The hybrid vehicle according to the first embodiment includes an internal combustion engine 10, a power transmission mechanism 20, a first motor generator 30, a first inverter 40, a first inverter controller 50, a second motor generator 80, a second inverter 60, a second inverter controller 70, a battery BT, a power combining mechanism 90, an axle 100, a power transmission shaft 110, and an overall controller CTR.
An auxiliary machine (power source for in-vehicle equipment) PA, the first inverter 40, the second inverter 60, capacitors C40 and C60, and a voltage detector SV are connected to DC links.
The internal combustion engine 10 is a prime mover, such as a gasoline engine or a diesel engine, which generates mechanical energy for driving the vehicle.
The power transmission mechanism 20 transmits the mechanical energy generated by the internal combustion engine 10 by dividing it into energy supplied to the first motor generator 30 side and energy supplied to the power transmission shaft 110.
The power transmission mechanism 20 includes, for example, a sun gear S, a planetary gear P circumscribing the sun gear S, a ring gear R in which the planetary gear P is inscribed, and a planetary carrier C that rotates along the orbit of the planetary gear P. In the present embodiment, the planetary carrier C is rotated by mechanical energy generated by the internal combustion engine 10. The rotational power of the sun gear S is transmitted to the first motor generator 30. The rotational power of the ring gear R is transmitted to the power combining mechanism 90 via the power transmission shaft 110. The power combining mechanism 90 is connected to the axle 100.
The first motor generator 30 converts mechanical energy supplied via the sun gear S of the power transmission mechanism 20 into electrical energy. The first motor generator 30 is, for example, a motor generator including a rotor and stator that interlock with the sun gear S, and outputs three-phase AC power.
The first inverter 40 is control means for controlling the operation of the first motor generator 30, which converts three-phase AC power output from the first motor generator 30 into DC power for a regenerative operation, and converts DC power supplied from the DC links into three-phase AC power and supplies it to the first motor generator 30 for a power running operation. The first inverter 40 is connected to the second inverter 60 and the battery BT via the DC links. Capacitor C40 is connected to the DC-side input/output terminal of the first inverter 40. Capacitor C40 suppresses voltage fluctuation between the DC links.
The first inverter controller 50 receives a torque command supplied from the overall controller CTR. The first inverter controller 50 generates a gate signal of the first inverter 40 under vector control, PWM control, etc., and operates the first inverter 40 so that the output torque of the first motor generator 30 realizes the torque command value.
The second inverter 60 converts DC power supplied from the DC links into AC power and outputs the AC power to the second motor generator 80. The second inverter 60 converts AC power supplied from the second motor generator 80 into DC power and outputs the DC power to the DC links. Capacitor C60 is connected to the DC-side input/output terminal of the second inverter 60. Capacitor C60 suppresses voltage fluctuation between the DC links.
The second inverter controller 70 receives a torque command supplied from the overall controller CTR. The second inverter controller 70 generates a gate signal of the second inverter 60 under vector control, PWM control, etc., and operates the second inverter 60 so that the output torque of the second motor generator 80 realizes the torque command value.

The second motor generator 80 is a motor generator driven by AC power supplied from the second inverter 60, and converts electric energy into mechanical energy and outputs it to the power combining mechanism 90.

The power combining mechanism 90 is, for example, a gear, which transmits to the axle 100 energy obtained by combining the mechanical energy transmitted from the ring gear R via the power transmission shaft and the mechanical energy supplied from the second inverter 60. The axle 100 is rotationally driven by the energy supplied from the power combining mechanism, and the wheel WL is rotationally driven via the axle 100.

The battery BT includes, for example, a storage battery including a plurality of secondary battery cells, can be charged with power supplied from the DC links, and is configured to discharge power via the DC links. The electrical connection between the battery BT and the DC links can be switched between a connected state and a disconnected state by a breaker 12.

The overall controller CTR can detect (or calculate) the angular velocity, output torque, and current (or estimates thereof) of the first motor generator 30, and the angular velocity, output torque, and current (or estimates thereof) of the second motor generator 80. The overall controller CTR can obtain a DC link voltage detected by the voltage detector SV. The overall controller CTR is a controller that controls the internal combustion engine 10, the first motor generator 30, the first inverter controller 50, the second inverter controller 70, the second motor generator 80, the battery BT, and the breaker 12 to operate in conjunction with each other based on various kinds of information on the second motor generator 30, the second motor generator 80, and the DC links.

The overall controller CTR is computing means including at least one processor, such as a central processing unit (CPU) or a micro processing unit (MPU), and a memory to record a program executed by the processor.

For example, when the internal combustion engine 10 stops while the hybrid vehicle is traveling at high speed, the overall controller CTR can activate the combustion engine 10 by driving the first inverter controller 50 (or the second inverter controller 70) to pass an excitation current to the first motor generator 30 (or the second motor generator 80) and outputting a necessary torque to the internal combustion engine 10.

The vehicle system of the present embodiment employs a series-parallel hybrid system. In this system, the rotation speed of the axle 100 (vehicle speed) and the rotation speed of the internal combustion engine 10 can be independently set, and the output torque of the vehicle and the output of the internal combustion engine 10 can be independently set. Accordingly, the operating point of the internal combustion engine 10 can be determined regardless of the driving state of the vehicle, and the internal combustion engine 10 can be operated with high efficiency by selecting an efficient operating point for the internal combustion engine 10. As a result, the fuel efficiency of the vehicle can be improved.

In addition, when there is a difference between the output energy of the internal combustion engine 10 and the output energy of the vehicle, the excess or deficiency of energy can be adjusted by charging or discharging the battery BT connected to the DC links.

The above can be realized by a series hybrid system which converts all the power of the internal combustion engine 10 into electrical energy and then converts it back into mechanical energy; however, the series-parallel hybrid system employed in the vehicle system of the present embodiment can increase power transmission efficiency when provided with a path through which mechanical energy can be directly transmitted to the axle. In general, when mechanical energy is converted into electrical energy and electrical energy is converted into mechanical energy, a loss occurs upon conversion. Therefore, the series-parallel hybrid system which directly transmits mechanical energy to the axle can exhibit higher energy utilization efficiency than the series hybrid system.

Next, the operation principle of a vehicle system provided with the power transmission mechanism 20 will be described.

The motion equations of the sun gear S, ring gear R, planetary gear P, and planetary carrier C of the power transmission mechanism 20 are shown below.

Here, 8 is the rotation angle of the gear, the motor generator, etc., ω is the rotation angular velocity of the gear, the motor generator, etc., T is the torque of the gear, the motor generator, etc., J is the inertia of the gear, the motor generator, etc., and G is the number of gear teeth. In addition, the subscripts used in the following equations have the following meanings: S indicates a relation to the sun gear, P indicates a relation to the planetary gear, C indicates a relation to the planetary carrier, R indicates a relation to the ring gear, E indicates a relation to the internal combustion engine, MG1 indicates a relation to the first motor generator 30, and MG2 indicates a relation to the second motor generator 80.

[Expression 1]

$$J_S \ddot{\theta}_S = T_S + \lambda_1 \quad (1)$$

$$J_P \ddot{\theta}_P = \frac{G_P}{G_S} \lambda_1 - \frac{G_P}{G_R} \lambda_2 \quad (2)$$

$$J_C \ddot{\theta}_C = T_C - \frac{G_S + G_P}{G_S} \lambda_1 - \frac{G_R - G_P}{G_R} \lambda_2 \quad (3)$$

$$J_R \ddot{\theta}_R = T_R + \lambda_2 \quad (4)$$

The constraint condition in the above motion equations is as follows:
[Expression 2]

$$G_S \theta_S + G_R \theta_R = (G_S + G_R)\theta_C \quad (5)$$

$\lambda_1$: Sun gear torque generated due to influence of another shaft in planetary gear mechanism

$\lambda_2$: Ring gear torque generated due to influence of another shaft in planetary gear mechanism

Where the inertia of each of the first motor generator 30 (sun gear), the internal combustion engine 10 (carrier), and the planetary gear is small enough to be ignorable with respect to the inertial mass of the vehicle, the following motion equations can be derived:
[Expression 3]

$$0 = T_S + \lambda_1 \quad (6)$$

$$0 = \frac{G_P}{G_S} \lambda_1 - \frac{G_P}{G_R} \lambda_2 \quad (7)$$

$$0 = T_C - \frac{G_S + G_P}{G_S} \lambda_1 - \frac{G_R - G_P}{G_R} \lambda_2 \quad (8)$$

Since the first motor generator 30 is connected to the sun gear, the following equation can be derived from equations (6) and (7) in consideration of $T_s = T_{MG1}$, and $\omega_s = \omega_{MG1}$ (9):
[Expression 4]

$$\frac{T_{MG1}}{G_S} + \frac{\lambda_2}{G_R} = 0 \quad (10)$$

The torque $T_{OUT}$ of the axle 100 is the sum of the torque $\lambda_2$ generated in the ring gear and the torque $T_{MG2}$ generated by the second motor generator 80, and thus can be transformed as shown in the following equation (11):
[Expression 5]

$$T_{OUT} = \lambda_2 + T_{MG2}$$
$$= -\frac{G_R}{G_S} T_{MG1} + T_{MG2} \quad (11)$$

If each gear of the power transmission mechanism 20 has a constant speed, the torque output by the internal combustion engine 10 (carrier) is expressed by the following equation (12) with reference to equations (6), (8), and (9):
[Expression 6]

$$T_C = \frac{G_S + G_P}{G_S}(-T_{MG1}) + \frac{G_R - G_P}{G_R}\lambda_2 \qquad (12)$$

In light of the relationship expressed by equation (10),

$$T_C = \frac{G_S + G_P}{G_S}(-T_{MG1}) + \frac{G_R - G_P}{G_R}\left(-\frac{G_R}{G_S}T_{MG1}\right)$$

$$= -\frac{G_S + G_R}{G_S}T_{MG1} \qquad (13)$$

From the above equation (13), it can be seen that the load of the internal combustion engine 10 is determined by the torque of the first motor generator 30.

$T_C$ in equation (13) is the torque output by the internal combustion engine 10 (carrier); therefore, the torque $T_{CL}$ externally applied in the normal rotation direction of the internal combustion engine 10 (carrier) is -1 times the torque $T_C$. Accordingly, it can be expressed by the following equation (14):
[Expression 7]

$$T_{CL} = -T_C = \frac{G_S + G_R}{G_S}T_{MG1} \qquad (14)$$

Therefore, where the carrier torque necessary for starting the internal combustion engine 10 is $T_{E\_START}$, the torque to be output by the first motor generator 30 can be expressed by the following equation (15) with reference to equation (14):
[Expression 8]

$$T_{MG1} = \frac{G_S}{G_S + G_R}T_{E\_start} \qquad (15)$$

On the other hand, when the internal combustion engine 10 is stopped, $\omega_c = 0$; therefore, the following equation (16) is derived from equations (5) and (9):
[Expression 9]

$$\omega_{MG1} = -\frac{G_R}{G_S}\omega_R \qquad (16)$$

In the above equation (16), $\omega_R$ is proportional to the vehicle traveling speed; therefore, the first motor generator 30 accelerates in the negative direction as the vehicle traveling speed increases. From equations (15) and (16), the energy $P_{MG1}$ of the first motor generator 30 while the vehicle is traveling and at the moment of starting the internal combustion engine 10 from the state where the internal combustion engine 10 is stopped can be expressed by the following equation (17):
[Expression 10]

$$P_{MG1} = \omega_{MG1}T_{MG1} = -\frac{G_R}{G_S + G_R}\omega_R T_{E\_start} \qquad (17)$$

Since $T_{E\_START} > 0$, $P_{MG1} < 0$ at the time of starting the internal combustion engine while the vehicle is traveling, that is, the first motor generator 30 is in a power generation operation.

From equation (17), the power generation energy of the first motor generator 30 is proportional to the vehicle travel speed; therefore, generated energy of the first motor generator 30 increases as the vehicle traveling speed increases.

Where the DC link voltage is $V_{DC}$, and the auxiliary machine PA and the second inverter 60 are stopped, the current $I_B$ flowing through the battery BT is expressed by the following equation (18):

[Expression 11]

$$I_B = \frac{\omega_{MG1} T_{MG1}}{V_{DC}} \qquad (18)$$

For example, when the input (charging) current and output (discharging) current of the battery BT are limited, the current shown in equation (18) may not be supplied to the battery BT, and thereby overvoltage of the DC links may be caused, or the torque necessary for starting the internal combustion engine 10 may not be output from the first motor generator 30, and thereby the vehicle may not operate.

Therefore, in the hybrid vehicle of the present embodiment, when starting the internal combustion engine 10, the overall controller CTR outputs a torque necessary for starting the internal combustion engine 10 from one of the first motor generator 30 and the second motor generator 80, and drives the first inverter 40 and the second inverter 60 so that at least part of the energy generated by one of the first motor generator 30 and the second motor generator 80 when starting the internal combustion engine 10 is consumed by the other one of the first motor generator 30 and the second motor generator 80.

In the following description, the hybrid vehicle of the present embodiment causes the second motor generator 80 to consume all or part of the energy of the above equation (17) in order to control the current flowing through the battery BT.

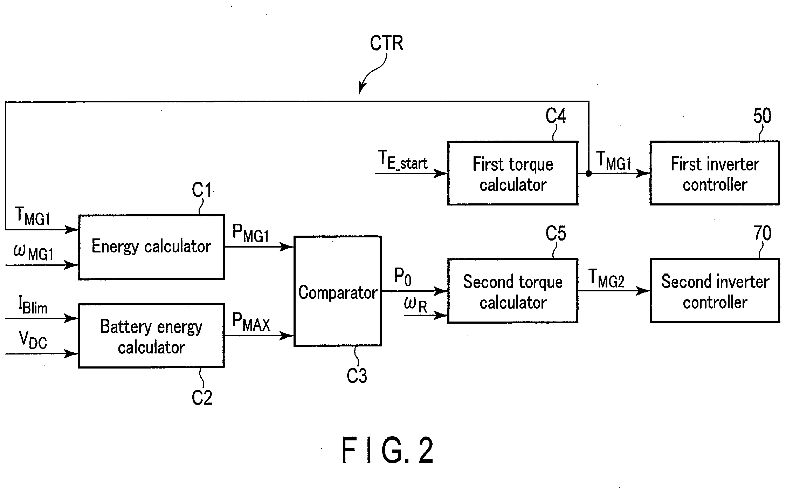

FIG. 2 is a block diagram schematically showing a configuration example of the overall controller of the hybrid vehicle of the present embodiment.

The overall controller CTR includes an energy calculator C1, a battery energy calculator C2, a comparator C3, a first torque calculator C4, and a second torque calculator C5.

In the present embodiment, for example, when controlling the current $I_B$ flowing through the battery BT to be not more than the upper limit value $I_{Blim}$ at the time of starting the internal combustion engine 10, the overall controller CTR controls the second inverter controller 70 (or first inverter controller 50) so that the generated energy of the first motor generator 30 (one of the first motor generator and the second motor generator) excluding the energy $P_{MAX}$ (= $V_{DC} \times I_{Blim}$) that can be absorbed by the battery BT is consumed by the second motor generator 80 (the other one of the first motor generator and the second motor generator).

In this case, the energy $P_0$ borne by the second motor generator 80 can be expressed by the following equation (19) with reference to the above equation (17). In the following equation (19), since the energy at the time of power generation by the motor generator is positive, the sign of the first term ($-P_{MG1}$) is negative.

[Expression 12]

$$\omega_R T_{MG2} = (-P_{MG1}) - P_{MAX}$$
$$= \frac{G_R}{G_S+G_R} \omega_R T_{E\_start} - V_{DC} I_{Blim} \equiv P_0 \qquad (19)$$

However, when the value of the above equation (19) is negative, the current $I_B$ flowing through the battery < the upper limit value $I_{Blim}$ even though the second motor generator 80 is not operated; therefore, the second motor generator 80 may be stopped.

Accordingly, at the time of starting the internal combustion engine 10, the output torque $T_{MG1}$ of the first motor generator 30 and the output torque $T_{MG2}$ of the second motor generator 80 are expressed by the following equations (20) :

[Expression 13]

$$T_{MG1} = \frac{G_S}{G_S+G_R} T_{E\_start}$$
$$T_{MG2} = \frac{G_R}{G_S+G_R} T_{E\_start} - \frac{V_{DC} I_{Blim}}{\omega_R} \quad \text{where operation is stopped when } T_{MG2} \leq 0$$
$$= \frac{P_0}{\omega_R} \qquad (20)$$

In accordance with the above-described principle, the overall controller CTR controls the first inverter controller 50 and the second inverter controller 70.

That is, the energy calculator C1 calculates energy generated when the internal combustion engine 10 is started by one of the first motor generator 30 and the second motor generator 80. In the present embodiment, the energy calculator C1 externally receives the output $T_{MG1}$ of the first torque calculator C4 and the rotation angular velocity $\omega_{MG1}$ of the first motor generator 30, multiplies them based on the above equation (17), and outputs energy $P_{MG1}$ of the first motor generator 30. The output torque $T_{MG1}$ input to the energy calculator C1 may be, for example, a value fed back from the first torque calculator C4 to be described later, or a value calculated based on the current or angular velocity of the first motor generator 30.

The battery energy calculator C2 externally receives the upper limit value $I_{Blim}$ of the current flowing through the battery BT and the DC link voltage $V_{DC}$, and calculates and outputs energy $P_{MAX}$ (= $V_{DC}I_{Blim}$) that can be absorbed by the battery BT of the generated energy of the first motor generator 30. The battery energy calculator C2 is a battery input/output limit determination unit that determines the upper limit value of the input energy of the battery BT.

The comparator C3 compares the energy calculated by the energy calculator C1 with the upper limit value $P_{MAX}$ determined by the battery input/output limit determination unit (battery energy calculator C2), and calculates the excess energy when the energy calculated by the energy calculator C1 exceeds the upper limit value $P_{MAX}$. That is, the comparator C3 receives the energy $P_{MG1}$ of the first motor generator 30 and the energy $P_{MAX}$ that can be absorbed by the battery BT, compares these values based on the above equation (19), and calculates and outputs energy $P_0$ borne by the second motor generator 80.

The first torque calculator C4 receives the carrier torque $T_{E\_START}$ necessary for starting the internal combustion engine 10, and calculates and outputs the torque $T_{MG1}$ of the first motor generator 30 based on the above equation (20). The carrier torque $T_{E\_START}$ may be a value set in advance in the overall controller CTR, or may be a value calculated based on the operating state of the vehicle (such as the angular velocity, current, etc. of the first motor generator 30).

The second torque calculator C5 receives the rotation angular velocity $\omega_R$ of the ring gear R and the energy $P_0$ borne by the second motor generator 80, and calculates and outputs the torque $T_{MG2}$ of the second motor generator 80 based on the above equation (20).

The overall controller CTR supplies the torque $T_{MG1}$ calculated by the first torque calculator C4 to the first inverter controller 50 as a torque command value, and supplies the torque $T_{MG2}$ calculated by the second torque calculator C5 to the second inverter controller 70 as a torque command value.

The first inverter controller 50 generates a gate command for the first inverter 40 so that the output of the first motor generator 30 realizes the received torque command value, and controls the first inverter 40. The first inverter 40 operates in accordance with the control of the first inverter controller 50, and the first motor generator 30 outputs torque $T_{MG1}$.

The second inverter controller 70 generates a gate command for the second inverter 60 so that the output of the second motor generator 80 realizes the received torque command value, and controls the second inverter 60. The second inverter 60 operates in accordance with the control of the second inverter controller 70, and the second motor generator 80 outputs torque $T_{MG2}$.

By operating the first motor generator 30 and the second motor generator 80 as described above, the current flowing through the battery BT can be controlled to be the upper limit value $I_{Blim}$ or less.

That is, the vehicle system of the present embodiment can consume at least part of the energy supplied to the DC links in the second motor generator 80 and control the current flowing through the battery BT to avoid a problem whereby the vehicle becomes inoperable due to the overvoltage of the DC links or an inability to start the internal combustion engine 10. As described above, the present embodiment can provide a highly reliable vehicle system.

The above equations are based on the assumption that the vehicle system operates in an ideal state in which the efficiency of equipment or the like is not considered. Upon actual application to a vehicle, it is desirable to adjust the output torques of the first motor generator 30 and the second motor generator 80 in consideration of the operation efficiency, etc. of equipment.

Next, the vehicle system of the second embodiment will be described below with reference to drawings.

In the following description, the same components as those in the above-described first embodiment will be assigned the same reference numerals, and descriptions thereof will be omitted.

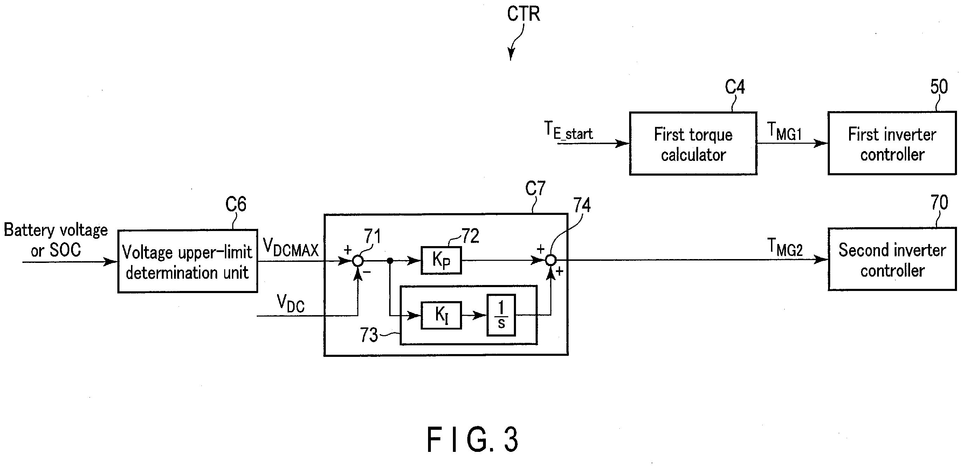

FIG. 3 is a block diagram schematically showing a configuration example of an overall controller of the hybrid vehicle according to the second embodiment.

The vehicle system of the present embodiment is the same as the vehicle system of the above-described first embodiment except for the configuration of the overall controller CTR.

In the above-described first embodiment, the overall controller CTR calculates energy generated by the first motor generator 30 at the time of staring the internal combustion engine 10, and controls the first inverter controller 50 and the second inverter controller 70 so that at least part of the energy is consumed by the second motor generator 80. This is based on the idea that the overall controller CR controls each component of the vehicle system by keeping the upper limit value of the current flowing through the battery constant (the upper limit value is $I_{Blim}$ in the first embodiment) regardless of the degree of limitation of the charging current and discharging current of the battery BT.

However, there may be a case where it is difficult to determine how much the charging current and discharging current of battery BT are limited. In general, it is known that, in a low temperature environment, the internal resistance of the battery BT increases, and the charging current and discharging current of the battery BT become small accordingly. This is because, if a large current is passed through the battery BT when the internal resistance is large, a large voltage fluctuation occurs due to a voltage drop caused by the internal resistance.

Therefore, in consideration of the fact that the degree of limitation of the charging current and discharging current of the battery BT varies depending on the magnitude of the internal resistance of the battery BT, control different from that in the above-described first embodiment is performed in the present embodiment.

If the current flowing through the battery BT increases when the internal resistance of the battery BT is larger than normal (for example, in a thermoneutral environment), the amount of increase in the DC link voltage $V_{DC}$ becomes larger than normal. Where the upper limit value of the DC link voltage $V_{DC}$ is $V_{DCMAX}$ (a voltage higher than the current battery voltage, for example, 110% of the battery voltage), when the DC link voltage $V_{DC}$ > the upper limit value $V_{DCMAX}$, the second motor generator 80 is controlled to consume energy. Accordingly, excess energy at that time (energy that cannot be absorbed by the battery BT) can be consumed by the second motor generator 80 in consideration of the degree of limitation of the charging current and discharging current of the battery BT.

The overall controller CTR of the present embodiment includes a voltage upper-limit determination unit C6, a voltage controller C7, and a first torque calculator C4. The voltage upper-limit determination unit C6 externally receives at least one of the battery voltage and the state of charge (SOC) of the battery BT, and sets the upper limit value $V_{DCMAX}$ of the DC link voltage $V_{DC}$ based on these values. The upper limit value $V_{DCMAX}$ set here is larger than the current battery voltage (for example, the latest value detected by a voltage detector), and is, for example, 110% of the current battery voltage. The voltage upper-limit determination unit C6 may determine the value such that the upper limit value $V_{DCMAX}$ increases as the state of charge of the battery BT increases.

The voltage upper-limit determination unit C6 may set the upper limit value $V_{DCMAX}$ in consideration of the internal resistance value of the battery BT. The internal resistance value of the battery BT may be calculated using, for example, the voltage, current, temperature, etc. of the battery BT, or may be externally received. The voltage upper-limit determination unit C6 may be provided in advance with a table or the like storing an upper limit value $V_{DCMAX}$ corresponding to the value of the DC link voltage $V_{DC}$ according to the internal resistance value of the battery BT.

The voltage controller C7 obtains the DC link voltage $V_{DC}$ from the voltage detector, receives the upper limit value $V_{DCMAX}$ from the voltage upper-limit determination unit C6, and calculates the torque $T_{MG2}$ of the second motor generator 80 so that energy is consumed by the second motor generator 80 when the DC link voltage $V_{DC}$ exceeds the upper limit value $V_{DCMAX}$.

The voltage controller C7 includes a subtractor 71, a proportional controller 72, an integral controller 73, and an adder 74. The subtractor 71 outputs a difference obtained by subtracting the DC link voltage $V_{DC}$ from the upper limit value $V_{DCMAX}$. The proportional controller 72 outputs a value obtained by multiplying the output value of the subtractor 71 by a proportional gain $K_P$. The integral controller 73 outputs a value obtained by multiplying the output value of the subtractor 71 by an integral gain $K_I$, and dividing the resultant value by the Laplace operator (s). The adder 74 outputs a sum obtained by adding the output value of the proportional controller 72 and the output value of the integral controller 73.

The values of the proportional gain $K_P$ and the integral gain $K_I$ are set so that the voltage controller C7 calculates a torque $T_{MG2}$ of the second motor generator 80 that makes the difference between the DC link voltage $V_{DC}$ and the upper limit value $V_{DCMAX}$ zero. The voltage controller C7 calculates torque $T_{MG2}$ so that the second motor generator 80 consumes excess energy only when the DC link voltage $V_{DC}$ is larger than the upper limit value $V_{DCMAX}$.

In other words, in the vehicle system of the present embodiment, the torque $T_{MG1}$ of the first motor generator 30 and the torque $T_{MG2}$ of the second motor generator 80 are expressed by the following equations (21):
[Expression 14]

$$T_{MG1} = \frac{G_S}{G_S + G_R} T_{E\_start}$$

$$T_{MG2} = 0 \text{ (Operation stoppe)} \quad ※V_{DC} \leq V_{DCMAX}$$
$$= \text{AVR}(V_{DCMAX} - V_{DC}) \quad ※V_{DC} > V_{DCMAX}$$
$$\text{or} \quad \text{AVR}(V_{DCMAX} - V_{DC}) > 0$$
$$\cdots (21)$$

The torque $T_{MG2}$ of the second motor generator 80 output from the voltage controller C7 is supplied to the second inverter controller 70.

That is, the present embodiment can provide the same effect as that of the above-described first embodiment, and enables control according to the degree of limitation of the charging current and discharging current of the battery BT by setting the upper limit value $V_{DCMAX}$ according to the voltage or SOC (or both values) of the battery BT and consuming energy in the second motor generator 80 only when the DC link voltage exceeds the upper limit value, as described above.

Next, the vehicle system of the third embodiment will be described with reference to drawings.

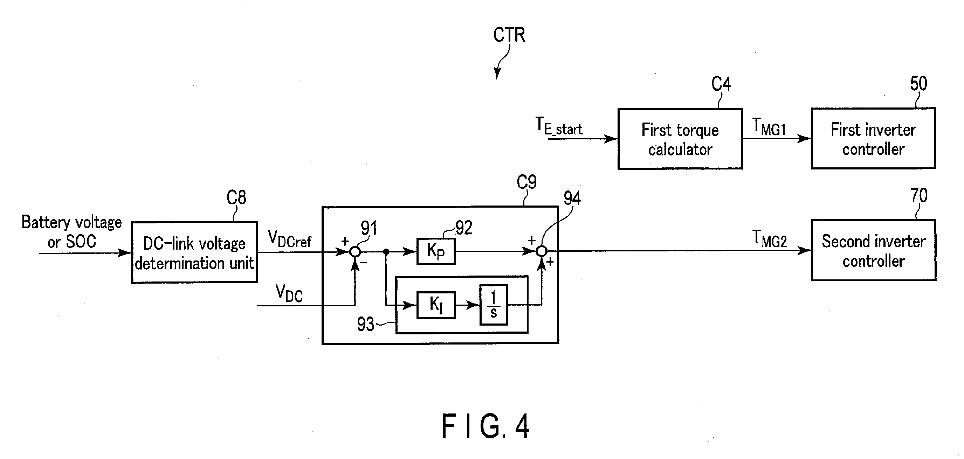

FIG. 4 is a block diagram schematically showing a configuration example of an overall controller of the hybrid vehicle of the third embodiment.

The overall controller CTR includes a DC-link voltage determination unit C8, a proportional-integral controller C9, and a first torque calculator C4.

In the above-described first embodiment, the vehicle system controls the charging current and discharging current of the battery BT by calculating energy generated by the first motor generator 30 at the time of starting the internal combustion engine 10 and enabling consumption of at least part of the energy in the second motor generator 80.

In the hybrid vehicle system of the first embodiment, when the upper limit value $I_{Blim}$ of the current flowing through the battery BT is zero, the operation theoretically works even if the electrical connection between the battery BT and the DC links is open (interrupted). However, in the above-described first embodiment, it is difficult to make the battery current exactly zero because errors in the sensor or the like mounted in the hybrid vehicle system or equipment efficiency or the like are not taken into consideration.

In contrast, in the present embodiment a hybrid vehicle system that can start the internal combustion engine 10 with the battery BT open is proposed.

That is, in the present embodiment, the overall controller CTR opens the breaker 12 and electrically disconnects the battery BT from the DC links when starting the internal combustion engine 10.

The DC-link voltage determination unit C8 externally receives at least one of the battery voltage and the SOC of the battery BT, and outputs a set value $V_{DCref}$ of the DC link voltage based on the battery voltage or the SOC of the battery BT (or both values). Here, the DC-link voltage determination unit C8 outputs the set value $V_{DCref}$ so that the fluctuation of the battery voltage or the SOC of the battery BT (or both values) becomes zero in consideration of an error in the sensor or the like and equipment operation efficiency or the like.

The proportional-integral controller C9 receives the set value $V_{DCref}$ and the DC link voltage $V_{DC}$ detected by the voltage detector, and outputs the torque of the second motor generator 80 of when the DC link voltage deviation ($V_{DCref}$ - $V_{DC}$) becomes zero.

Here, the torques $T_{MG1}$ and $T_{MG2}$ of the first motor generator 30 and the second motor generator 80 of when $I_{Blim} = 0$ in the above equation (20) are expressed by the following equations (22):

[Expression 15]

$$T_{MG1} = \frac{G_S}{G_S + G_R} T_{E\_start}$$

$$T_{MG2} = \frac{G_R}{G_S + G_R} T_{E\_start} \qquad (2\,2)$$

When the second motor generator 80 consumes energy so that the DC link voltage $V_{DC}$ detected by the voltage detector becomes the set value $V_{DCref}$ (when the difference between the DC link voltage $V_{DC}$ and the set value $V_{DCref}$ becomes zero), the torques $T_{MG1}$ and $T_{MG2}$ of the first motor generator 30 and the second motor generator 80 are expressed by the following equations (23):

[Expression 16]

$$T_{MG1} = \frac{G_S}{G_S + G_R} T_{E\_start}$$

$$T_{MG2} = AVR(V_{DCref} - V_{DC}) \qquad (2\,3)$$

In the above equation (23), $AVR(V_{DCref} - V_{DC})$ is a control system for making the DC link voltage deviation $V_{DCref} - V_{DC}$ zero, and consists of, for example, a proportional-integral (PI) control system.

The proportional-integral controller C9 includes a subtractor 91, a proportional controller 92, an integral controller 93, and an adder 94. The subtractor 91 outputs a difference obtained by subtracting the DC link voltage $V_{DC}$ from the set value $V_{DCref}$. The proportional controller 92 outputs a value obtained by multiplying the output value of the subtractor 91 by the proportional gain $K_p$. The integral controller 93 outputs a value obtained by multiplying the output value of the subtractor 91 by the integral gain $K_I$, and dividing the resultant value by the Laplace operator (s). The adder 94 outputs a sum obtained by adding the output value of the proportional controller 92 and the output value of the integral controller 93.

The torque $T_{MG2}$ of the second motor generator 80 output from the proportional-integral controller C9 is supplied to the second inverter controller 70.

By operating the first motor generator 30 and the second motor generator 80 to generate the torques in the equations (23), for example, the internal combustion engine 10 can be started in the state where the battery BT is electrically open to the DC links.

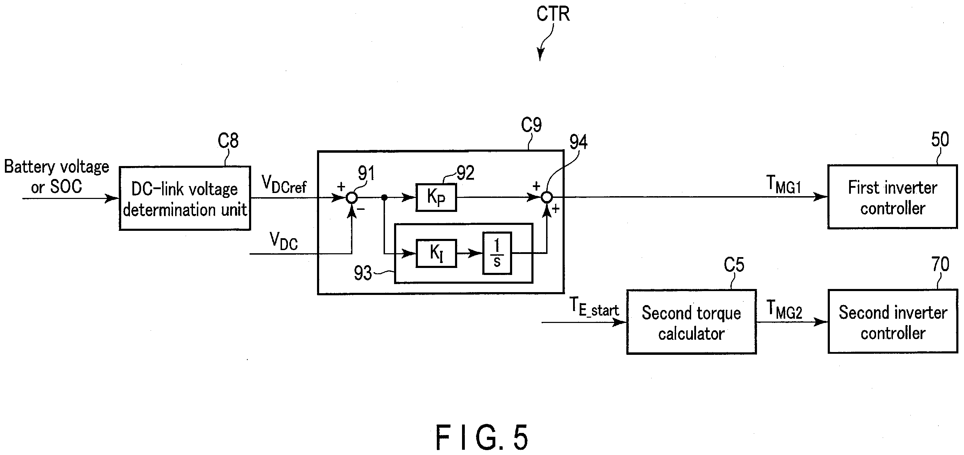

FIG. 5 is a block diagram schematically showing another configuration example of the overall controller of the hybrid vehicle according to the third embodiment.

In the example shown in FIG. 4, the overall controller CTR operates the hybrid vehicle system using equation (23) based on the configuration in which the first motor generator 30 outputs a torque necessary for starting the internal combustion engine 10, and the second motor generator 80 auxiliarily operates so as to enable the first motor generator 30 to output a predetermined torque. In contrast, described below is a configuration in which the torque necessary for starting the internal combustion engine 10 is output by the second motor generator 80, and the first motor generator 30 auxiliarily operates so as to enable the second motor generator 80 to output a predetermined torque.

Unlike the example shown in FIG. 4, the torque of the first motor generator 30 is calculated by the proportional-integral controller C9 in this example.

That is, the overall controller CTR includes a DC-link voltage determination unit C8, a proportional-integral controller C9, and a second torque calculator C5.

The DC-link voltage determination unit C8 externally receives at least one of the battery voltage and the SOC of the battery BT, and outputs a set value $V_{DCref}$ of the DC link voltage based on the battery voltage or the SOC of the battery BT (or both values). Here, the DC-link voltage determination unit C8 outputs the set value $V_{DCref}$ so that the fluctuation of the battery voltage or the SOC of the battery BT (or both values) becomes zero in consideration of an error in the sensor or the like and equipment operation efficiency or the like.

The proportional-integral controller C9 receives the set value $V_{DCref}$ and the DC link voltage $V_{DC}$ detected by the voltage detector, and outputs the torque $T_{MG1}$ of the first motor generator 30 of when the DC link voltage deviation ($V_{DCref}$ - $V_{DC}$) becomes zero.

When the second motor generator 80 consumes energy so that the DC link voltage $V_{DC}$ detected by the voltage detector becomes the set value $V_{DCref}$ (when the difference between the DC link voltage $V_{DC}$ and the set value $V_{DCref}$ becomes zero), the torques $T_{MG1}$ and $T_{MG2}$ of the first motor generator 30 and the second motor generator 80 are expressed by the following equations (24):

[Expression 17]

$$T_{MG1} = AVR(V_{DCref} - V_{DC})$$

$$T_{MG2} = \frac{G_R}{G_S + G_R} T_{E\_start} \qquad (2\,4)$$

The proportional-integral controller C9 includes a subtractor 91, a proportional controller 92, an integral controller 93, and an adder 94. The subtractor 91 outputs a difference obtained by subtracting the DC link voltage $V_{DC}$ from the set value $V_{DCref}$. The proportional controller 92 outputs a value obtained by multiplying the output value of the subtractor 91 by the proportional gain $K_p$. The integral controller 93 outputs a value obtained by multiplying the output value of the subtractor 91 by the integral gain $K_I$, and dividing the resultant value by the Laplace operator (s). The adder 94 outputs a sum obtained by adding the output value of the proportional controller 92 and the output value of the integral controller 93.

The torque $T_{MG1}$ of the first motor generator 30 output from the proportional-integral controller C9 is supplied to the first inverter controller 50.

That is, the present embodiment can provide the same effect as that of the above-described first embodiment, and enables starting the internal combustion engine 10 in the state where the battery BT is electrically open to the DC links by operating the first motor generator 30 and the second motor generator 80 to generate the torques in the above equations (23) or the above equations (24), as described above.

Although several embodiments of the present invention have been described, these embodiments are presented as examples and are not intended to limit the scope of the invention. These novel embodiments can be implemented in various other forms, and various omissions, replacements, and changes can be made without departing from the spirit of the invention. These embodiments and modifications thereof are included in the scope and spirit of the invention, and are included in the scope of the claimed inventions and their equivalents.

**Claims**

1.  A hybrid vehicle system comprising:

    a prime mover;
    a first motor generator;
    a second motor generator;
    a power transmission mechanism configured to distribute power of the prime mover to the first motor generator and a power transmission shaft;
    a power combining mechanism configured to combine power of the power transmission shaft and power of the second motor generator;
    an axle to which power combined in the power combining mechanism is transmitted;
    a first inverter configured to drive the first motor generator;
    a second inverter electrically connected to the first inverter via DC links and configured to drive the second motor generator;
    a battery electrically connected to the DC links; and
    an overall controller configured to output a torque necessary for starting the prime mover by means of one of the first motor generator and the second motor generator when starting the prime mover, and drive the first inverter and the second inverter so that at least part of energy generated by the one of the first motor generator and the second motor generator when starting the prime mover is consumed by an other one of the first motor generator and the second motor generator.

2.  The hybrid vehicle system according to claim 1, wherein the overall controller
    includes: an energy calculator configured to calculate the energy generated by the one of the first motor generator and the second motor generator when starting the prime mover; a battery input/output limit determination unit configured to determine an upper limit value of input energy and output energy of the battery; and a comparator configured to compare the energy calculated by the energy calculator with the upper limit value determined by the battery input/output limit determination unit and calculate excess energy when the energy calculated by the energy calculator exceeds the upper limit value, and
    drives the first inverter and the second inverter so that the excess energy is consumed by the other one of the first motor generator and the second motor generator.

3.  The hybrid vehicle system according to claim 2, wherein the overall controller stops operation of the other one of the first motor generator and the second motor generator when the excess energy calculated by the comparator is zero or smaller than zero.

4.  The hybrid vehicle system according to claim 1, further comprising a voltage detector configured to detect a voltage of the DC links,
    wherein the overall controller
    includes a voltage upper-limit determination unit configured to determine an upper limit value of the voltage of the DC links, and a voltage controller configured to calculate a torque of the other one of the first motor generator and the second motor generator so that a difference between the voltage of the DC links obtained from the voltage detector and the upper limit value becomes zero, and
    controls the first inverter and the second inverter so that, when starting the prime mover, the one of the first motor generator and the second motor generator outputs a torque necessary for starting the prime mover, and the other one of the first motor generator and the second motor generator outputs a torque according to an output of the voltage controller.

5.  The hybrid vehicle system according to claim 4, wherein the upper limit value determined by the voltage upper-limit determination unit is larger than a no-load battery voltage immediately before starting the prime mover and less than an overvoltage level of the first inverter and the second inverter.

6.  The hybrid vehicle system according to claim 4, wherein the voltage upper-limit determination unit externally receives a state of charge of the battery, and

the upper limit value determined by the voltage upper-limit determination unit becomes larger as the state of charge of the battery becomes larger.

7. The hybrid vehicle system according to claim 1, further comprising a voltage detector configured to detect a voltage of the DC links,
wherein the overall controller
includes a DC-link voltage determination unit configured to determine a DC-link voltage command value so that voltage fluctuation of the DC links becomes zero, and a proportional-integral controller configured to control a torque of the other one of the first motor generator and the second motor generator so that a difference between the DC-link voltage command value and the DC link voltage obtained from the voltage detector becomes zero, and controls the first inverter and the second inverter so that, when starting the prime mover, the one of the first motor generator and the second motor generator outputs a torque necessary for starting the prime mover, and the other one of the first motor generator and the second motor generator outputs a torque according to an output of the proportional-integral controller.

8. The hybrid vehicle system according to claim 7, further comprising a breaker configured to interrupt electrical connection between the battery and the DC links,
wherein the overall controller opens the breaker and electrically disconnects the battery from the DC links when starting the prime mover.

9. The hybrid vehicle system according to any one of claims 1 to 8, wherein the overall controller drives the first inverter and the second inverter so that, when starting the prime mover, the first motor generator outputs a torque necessary for starting the prime mover, and the second motor generator consumes at least part of energy generated when starting the prime mover.

F I G. 1

F I G. 2

F I G. 3

EP 3 693 239 A1

FIG. 4

F I G. 5

## INTERNATIONAL SEARCH REPORT

| International application No. |
|---|
| PCT/JP2017/036507 |

A. CLASSIFICATION OF SUBJECT MATTER
Int.Cl. B60W10/08(2006.01)i, B60W20/00(2016.01)i, B60W20/10(2016.01)i

According to International Patent Classification (IPC) or to both national classification and IPC

B. FIELDS SEARCHED

Minimum documentation searched (classification system followed by classification symbols)
Int.Cl. B60W10/00-B60W20/50, B60K6/20-6/547

Documentation searched other than minimum documentation to the extent that such documents are included in the fields searched
Published examined utility model applications of Japan          1922–1996
Published unexamined utility model applications of Japan        1971–2017
Registered utility model specifications of Japan                1996–2017
Published registered utility model applications of Japan        1994–2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2013-227017 A (TOYOTA MOTOR CORP.) 07 November 2013, paragraphs [0027]-[0095], [0139]-[0154], fig. 1, 18-20 (Family: none) | 1-9 |
| Y | JP 2010-202169 A (NISSAN MOTOR CO., LTD.) 16 September 2010, paragraph [0005] (Family: none) | 1-9 |
| A | JP 2008-247226 A (TOYOTA MOTOR CORP.) 16 October 2008 (Family: none) | 1-9 |
| | JP 2010-247749 A (TOYOTA MOTOR CORP.) 04 November 2010 (Family: none) | 1-9 |
| | EP 2058203 A2 (GM GLOBAL TECHNOLOGY OPERATIONS, INC.) 13 May 2009 & US 2009/0118941 A1 & CN 101450666 A | 1-9 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 December 2017 (21.12.2017) | 09 January 2018 (09.01.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**EP 3 693 239 A1**

**REFERENCES CITED IN THE DESCRIPTION**

**Patent documents cited in the description**

- JP 5866803 B
- JP 5929940 B